# EUROPEAN PATENT SPECIFICATION

(11) **EP 2 274 145 B1**
(45) Date of publication and mention of the grant of the patent: **15.08.2012**
(21) Application number: 09729053.0
(22) Date of filing: 17.03.2009
(51) Int. Cl.: B29B 17/00, B30B 9/32

(54) **RECEIVING-HEATING UNIT FOR USE IN BOTTLE COMPRESSION DEVICES**
AUFNAHMEHEIZEINHEIT ZUR VERWENDUNG IN FLASCHENPRESSVORRICHTUNGEN
UNITÉ DE RÉCEPTION-CHAUFFAGE À DES FINS D'UTILISATION DANS DES DISPOSITIFS DE COMPRESSION DE BOUTEILLES

(30) Priority: 31.03.2008 HU 0800199
(43) Date of publication of application: 19.01.2011
(73) Proprietor: Thermo Press International Kft., 2000 Szentendre (HU)
(72) Inventor: SIMON, Lajos, H-2457 Adony (HU)
(74) Representative: Erdély, Péter
(86) International application number: PCT/HU2009/000026
(87) International publication number: WO 2009/122224

(56) References cited:
- WO-A1-03/059606
- JP-A- 10 006 336
- JP-A- 2005 254 790
- ANONYMOUS: "Thermo-press" INTERNET ARTICLE, [Online] 13 August 2006 (2006-08-13), pages 1-2, XP002542649 Retrieved from the Internet: URL:http://web.archive.org/web/20060813175 323/http://www.thermo-press.hu/kep.jpg> [retrieved on 2009-08-24]
- ANONYMOUS: "INSTRUCTIONS FOR USE: Termo-Press household plastic bottle shrinking appliance" INTERNET ARTICLE, [Online] 14 August 2006 (2006-08-14), pages 1-4, XP002542650 Retrieved from the Internet: URL:http://web.archive.org/web/20060814234 716/www.thermo-press.hu/zsugorito+eng2.pdf > [retrieved on 2009-08-24]

## Description

Object of the present invention is a receiving-heating unit for use in bottle compression devices, containing means for holding and sealing the mouth part of a bottle, ring-like heating elements and a switch for said heating elements.

It is known that beverages and other food products are filled more and more often into plastic bottles for sale, and the manufacturers want to produce rather one-way bottles than repurchasable ones. Thus, these bottles get in large amounts to waste yards or into nature, contaminating thereby the environment or increasing to a great extent the amount of waste.

In order to eliminate, at least partly, the above problem, a great number of suggestions were made for the domestic annihilation or compacting of such bottles.

Known bottle compactors generally comprise a housing or frame receiving the bottle, heating means and compressing means.

EP 0707932 discloses a bottle compactor containing a housing designed to receive an empty bottle. The housing is provided with a resistor and a cursor, the end of which is formed like a fork engaging the plastic bottle at its neck part. The cursor with the fork compresses the heated and softened bottle from the upside down.

In the bottom of the apparatus described in FR 2668732, there is a separate heating chamber wherein air is heated by resistance heating and the heated air is pulsed by a fan into a volume containing the plastic bottle, which is compacted by a plate moved by motor driven spindles.

In the above devices, the bottles are heated from below, and they are usually compressed from above. As a result, the folded plastic layers are irregular and, in this way, optimal compression cannot be achieved.

In other devices, heating is provided along the whole length of the device and/or by means of a patron intruding into the bottle. Such an apparatus is described e.g. in FR 2692190. In this case, the above-mentioned disadvantage, namely the irregular compacting is especially obvious and, in addition, the energy consumption increases significantly as well.

In FR 2712230 the disclosed apparatus has a closed housing with a central heater intruding into the bottle, which is compressed both from top to bottom and from bottom to top. The disadvantage of this is the unnecessarily increased energy requirement of compression and, further on, it is complicated and expensive.

WO 03/059606 (and www.thermopress.hu or www.youtube.com) discloses an apparatus, wherein the housing or frame is constructed to receive the bottle with its mouth part upwards, the heating element or the part of the heating element surrounding the bottle is at most 60 mm high, and is arranged around the neck part of the bottle in its starting position and the fixing element is a sealable plug in the compressing means, to be fitted into the mouth of the bottle and having an air channel, the cross section of which is preferably adjustable, preferably with flow control means.

This construction eliminates many of the drawbacks of the prior devices, the unit containing the heating element is, however rather voluminous and for the operation thereof too much steps are needed.

The object of the present invention is therefor to provide a cheap and simple device for compacting empty plastic bottles, more particularly a receiving-heating unit for use in bottle compression devices, which can be operated safely and needs not much space and many steps of operation.

According to the invention, the receiving-heating unit for use in bottle compression devices, contains means for holding and sealing the mouth part of a bottle, ring-like heating elements and a switch for said heating elements, wherein said means for sealing the mouth part of a bottle is a sleeve fixed on the housing of the heating element and a sliding insert therein. There is a flexible sealing ring arranged in an annular groove between the lower part of the sliding insert and the front surface of the sleeve. The switch is provided with a switch arm, which can be rotated around the axis of the sleeve, against the action of a spring. The switch arm is provided with means for lifting and lowering the sleeve. Said means for holding the mouth part of a bottle is a lever tiltably arranged on the housing of the heating element, against spring-force. The lever has a first, lower arm moved by the mouth part of the bottle and a second, upper arm locking the switch arm, which, preferably can be rotated around the stub of the sliding insert.

The means for lifting and lowering the sliding insert may be an actuating cam or guide curve, meanwhile there may be a guide curve or actuating cam on the upper front surface of the sleeve, co-operating with the actuating cam or guide curve on the switch arm.

In a preferred embodiment, the upper arm of the means for holding the mouth part of a bottle, which is locking the switch arm, is in a position preventing rotation of the switch arm until a bottle is inserted in the unit.

In another preferred embodiment, the switch of the heating element is provided with an electromagnet for retracting the switch arm and/or an end switch (25) and/or a time switch.

Further details of the invention will be explained by means of embodiments illustrated in the enclosed drawings, wherein
- Figure 1: is a perspective view of a preferred embodiment of the receiving-heating unit according to the invention;
- Figure 2: is A - A section of the embodiment shown in Fig.1, out of operation; and
- Figure 3: is A - A section of the embodiment shown in Fig.1, with a bottle therein.

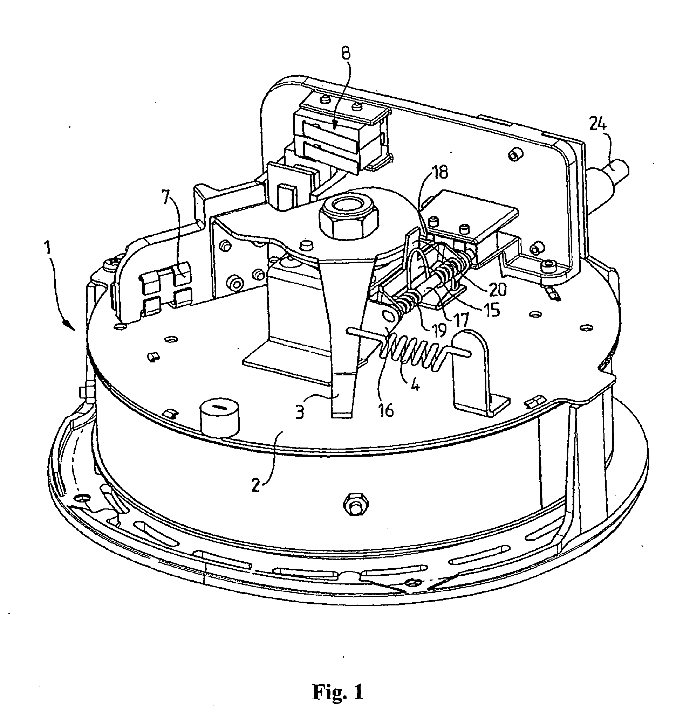

The receiving-heating unit according to the invention as shown in Figs. 1 to 3 contain a heating element 1 and a switch unit mounted on the housing 2 of the heating element which is designated to receive the bottle to be compressed. The switch unit is provided with a switch arm 3, which can be rotated against a spring 4, on the stub 6 of a sliding insert 5. There is a contact 7 on an extension of the switch arm 3 for actuating a switch 8. If switch 8 is closed, heating element 1 will be alive, together with an electromagnet, which will keep switch arm 3 in closed position.

Sliding insert 5 supporting the switch arm 3 is arranged in a sleeve 9, and is provided with a10 collar at the lower end. Between this collar 10 and the annular front surface of the sleeve 9, an annular groove is formed which receives a flexible sealing ring 11.

The switch arm 3 is secured on stub 6 of the sliding insert 5 by a bolt pin 12 and, in this way, both parts may be lifted and lowered together. For this purpose, the upper annular front surface of slide 9 is provided with a guide curve 13, and on the bottom surface of the switch arm 3 there is an actuating cam14. Accordingly, sliding insert 5 is lifted if the switch arm 3 is rotated.

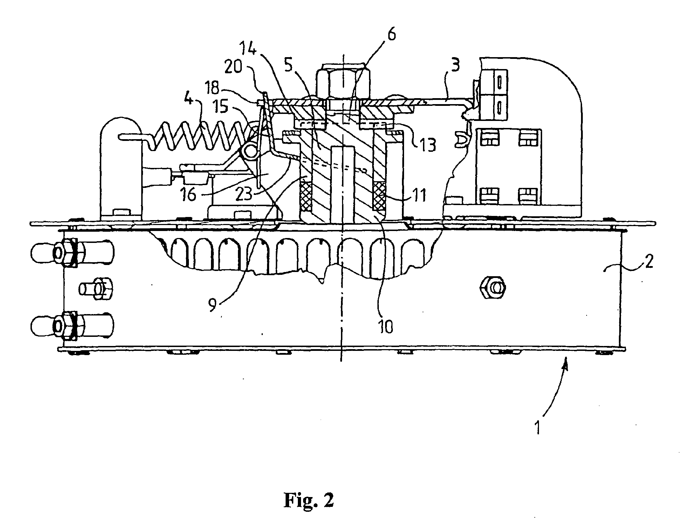

In order to prevent switching on the heating element 1 when there is no bottle in the device, switch arm 3 is locked against rotation until a bottle is received in the device. Locking action is provided by lever 15 which can be rotated around a horizontal pin 17 arranged in bracket 16 mounted on the housing 2 of the heating element 1. There is a catch 18 in the middle part of the switch arm 3, for abutting on the upper arm 20 of lever 15, which is held by a spring19 to prevent rotation of switch arm 3 (see Fig. 2).

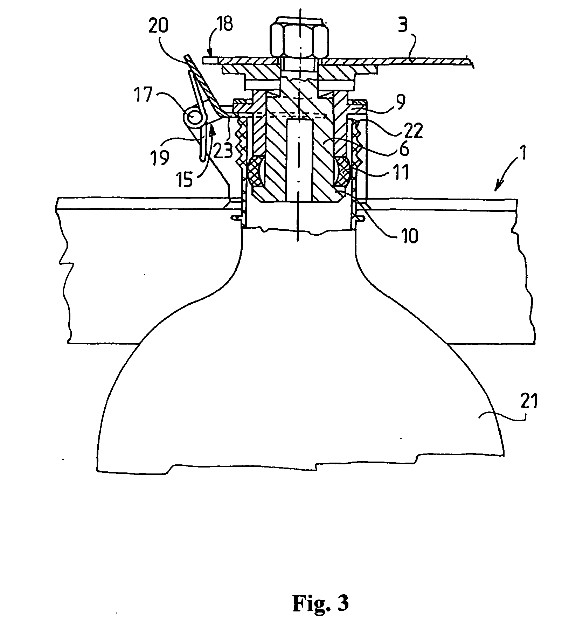

When a bottle 21 is loaded in the device, the mouth part 21 is lifting the lower arm 23 of lever 15 and, in turn, upper arm 20 swings out against the force of spring 19 and allows switch arm 3 to be rotated (see Fig. 3)

When switch arm 3 is rotated:
- sliding insert 5 is lifted and it compresses sealing ring 11, which is pressed therefor to the inner surface of the mouth piece 22 of bottle 21 which is then captured in the device, and
- switch 8 will be actuated by contact 7 at the end of switch arm 3, which then switches on the electromagnet and heating element 1.

The heat produced by heating element 1 softens the material of the bottle 21, which is then compressed by the weight of the receiving-heating unit. When compressing is finished, receiving-heating unit reaches the bottom of the device, and an end switch 24 mounted on the housing 2 of the heating unit 1 stops heating and releases the electromagnet. In the case of any breakdown, a time switch, mounted on the housing 2 of the heating unit 1 as well, stops heating, too.

It is to be noted that the embodiment shown in the drawing illustrates only the invention, and persons skilled in the art can construct variations within the scope defined in the attached claims.

## Claims

1. Receiving-heating unit for use in bottle compression devices, containing means for holding and sealing the mouth part (22) of a bottle (21), ring-like heating elements (1) and a switch (8) for said heating elements (1), wherein
said means for sealing the mouth part (22) of a bottle (21) is a sleeve (9) fixed on the housing (2) of the heating element (1) and a sliding insert (5) therein, wherein a flexible sealing ring (11) is arranged in an annular groove between a collar (10) at the lower part of the sliding insert (5) and the front surface of the sleeve (9); wherein
the switch (8) is provided with a switch arm (3) which can be rotated around the axis of the sleeve (9) and the sliding insert (5) against the action of a spring (4) and is provided with means for lifting and lowering the sliding insert (5), **characterized in that**
said means for holding the mouth part (22) of a bottle (21) is a lever (15) arranged on the housing (2) of the heating element (1), is tiltable against the action of another spring (19), and has a first, lower arm (23) moved by the mouth part (22) of the bottle (21) and a second, upper arm (20) locking the switch arm (3).

2. The receiving-heating unit according to claim 1, **characterized in that** the switch arm (3) can be rotated around the stub (6) of the sliding insert (5).

3. The receiving-heating unit according to claim 1 or 2, **characterized in that** said means for lifting and lowering the sliding insert (5) is an actuating cam or guide curve.

4. The receiving-heating unit according to claim 3, **characterized in that** there is a guide curve or actuating cam on the upper front surface of the sleeve (9), co-operating with the actuating cam or guide curve on the switch arm (3).

5. The receiving-heating unit according to any of claims 1 to 4, **characterized in that** said upper arm (20) of the means for holding the mouth part (22) of a bottle (21), which is locking the switch arm (3), is in a position preventing rotation of the switch arm (3) until a bottle (21) is inserted in the unit.

6. The receiving-heating unit according to any of claims 1 to 5, **characterized in that** the switch (8) is provided with an electromagnet for retracting the switch arm (3).

7. The receiving-heating unit according to any of claims 1 to 6, **characterized in that** the heating element (1) is provided with an end switch (24) connected to the switch (8).

8. The receiving-heating unit according to any of claims 1 to 7, **characterized in that** the heating element (1) is provided with a time switch connected to the switch (8).

## Patentansprüche

1. Aufnahme- und Heizeinheit zur Anwendung in Flaschenpressen, umfassend Stütz- und Dichtelemente für das Mundstück (22) einer Flasche (21), ringförmige Heizelemente (1) und einen Schalter (8) für diese Heizelemente (1), wobei das Dichtelement für das Mundstück (22) einer Flasche (21) aus einer am Gehäuse (2) des Heizelementes (1) befestigten Führungbuchse (9) und einem in dieser geführten Gleiteinsatz (5) besteht, wobei in einem zwischen einem unteren Rand (10) des Gleiteinsatzes (5) und einer unteren Stirnfläche der Führungsbuchse (9) ausgebildeten Ringnut ein elastischer Dichtring (11) angeordnet ist; weiterhin ist der Schalter (8) mit einem Betätigungsarm (3) versehen, der um die geometrische Achse der Führungsbuchse (9) und des Gleiteinsatzes (5) gegen die Wirkung einer Feder (4) verschwenkbar ist und mit einem Anhebe- und Absenkelement für den Gleiteinsatz (5) versehen ist, **dadurch gekennzeichnet, dass** das Stützelement für das Mundstück (22) einer Flasche (21) ein am Gehäuse (2) des Heizelementes (1) gegen die Wirkung einer anderen Feder (19) kippbarer Hebel (15) ist, der einen ersten, durch das Mundstück (22) der Flasche (21) bewegbaren unteren Schenkel (23) und einen zweiten, den Betätigungsarm (3) des Schalters (8) verriegelnden oberen Schenkel (20) aufweist.

2. Aufnahme- und Heizeinheit nach Anspruch 1, **dadurch gekennzeichnet, dass** der Betätigungsarm (3) des Schalters (8) um den Achsenstumpf (6) des Gleiteinsatzes (5) verschwenkbar ist.

3. Aufnahme- und Heizeinheit nach Anspruch 1 oder 2, **dadurch gekennzeichnet, dass** das Anhebe- und Absenkelement für den Gleiteinsatz (5) ein Steuernocken oder eine Steuerkurve ist.

4. Aufnahme- und Heizeinheit nach Anspruch 3, **dadurch gekennzeichnet, dass** an der oberen Stirnfläche der Führungsbuchse (9) ein Steuernocken oder eine Steuerkurve vorgesehen ist, der oder die mit dem Steuernocken oder der Steuerkurve am Betätigungsarm (3) des Schalters (8) zusammenwirkt.

5. Aufnahme- und Heizeinheit nach einem der Ansprüche 1 bis 4, **dadurch gekennzeichnet, dass** der obere Schenkel (20) des Stützelementes für das Mundstück (22) einer Flasche (21), der den Betätigungsarm (3) verriegelt, sich in einer die Verschwenkung des Betätigungsarmes (3) verhindernden Position befindet, bis in die Einheit eine Flasche (21) eingelegt wird.

6. Aufnahme- und Heizeinheit nach einem der Ansprüche 1 bis 5, **dadurch gekennzeichnet, dass** der Schalter (8) mit einem Elektromagnet zum Einziehen des Betätigungsarmes (3) versehen ist.

7. Aufnahme- und Heizeinheit nach einem der Ansprüche 1 bis 6, **dadurch gekennzeichnet, dass** das Heizelement (1) mit einem an den Schalter (8) angeschlossenen Endschalter (24) versehen ist.

8. Aufnahme- und Heizeinheit nach einem der Ansprüche 1 bis 7, **dadurch gekennzeichnet, dass** das Heizelement (1) mit einem an den Schalter (8) angeschlossenen Zeitschalter versehen ist.

## Revendications

1. Ensemble de réception et de chauffage pour utilisation dans compacteurs de bouteilles, l'ensemble comprenant des éléments de support et d'étenchéité pour la bouche (22) d'une bouteille (21), des éléments de chauffage (1) annulaires, et un interrupteur (8) pour ces éléments de chauffage (1), l'élément d'étenchéité pour la bouche (22) d'une bouteille (21) étant constitué d'une gaine de guidage (9) fixée sur le corps (2) de l'élément de chauffage (1) et d'un coulisseau (5) guidé dans cette gaine de guidage (9), en plus un joint d'étenchéité (11) flexible étant arrangé dans une rainure annulaire entre un rebords inférieur (10) du coulisseau (5) et une surface frontale inférieure de la gaine de guidage (9), et l'interrupteur (8) est muni d'un bras d'actionnement (3) pivotable contre l'action d'un ressort (4) et d'un élément de levage et d'abaissement pour le coulisseau (5), **caractérisé en ce que** l'élément de support pour la bouche (22) d'une bouteille (21) est un levier (15) pouvant être basculé contre l'action d'un second ressort (19), ce levier (15) étant arrangé sur le corps (2) de l'élément de chauffage (1) et étant constitué d'une première aile (23) inférieure pouvant être déplacée par la bouche (22) de la bouteille (21) et d'une seconde aile (20) supérieure verrouillant le bras d'actionnement (3) de l'interrupteur (8).

2. Ensemble de réception et de chauffage selon la revendication 1, **caractérisé en ce que** le bras d'actionnement (3) pouvant être pivoté autour le bout d'arbre (6) du coulisseau (5).

3. Ensemble de réception et de chauffage selon la revendication 1 ou 2, **caractérisé en ce que** l'élément de levage et d'abaissement pour le coulisseau (5) est une came d'actionnement ou une coulisse de guidage.

4. Ensemble de réception et de chauffage selon la revendication 3, **caractérisé en ce que** sur la surface frontale supérieure de la gaine de guidage (9) est prévue une came d'actionnement ou une coulisse de guidage pouvant coopérer avec la came d'actionnement ou la coulisse de guidage prévue sur le bras d'actionnement (3).

5. Ensemble de réception et de chauffage selon une des revendications 1 à 4, **caractérisé en ce que** l'aile (20) supérieure de l'élément de support pour la bouche (22) d'une bouteille (21) verrouillant le bras d'actionnement (3) de l'interrupteur (8) se trouve dans une position empêchante le pivotement du bras d'actionnement (3) jusqu'à l'insertion d'une bouteille (21) dans l'ensemble.

6. Ensemble de réception et de chauffage selon une des revendications 1 à 5, **caractérisé en ce que** l'interrupteur (8) est muni d'un éléctro-aimant pour retirer le bras d'actionnement (3) de l'interrupteur (8).

7. Ensemble de réception et de chauffage selon une des revendications 1 à 6, **caractérisé en ce que** l'élément de chauffage (1) est muni d'un interrupteur-limiteur (24) connecté à l'interrupteur (8).

8. Ensemble de réception et de chauffage selon une des revendications 1 à 7, **caractérisé en ce que** l'élément de chauffage (1) est muni d'un temporisateur connecté à l'interrupteur (8).
